# EUROPEAN PATENT APPLICATION

(11) **EP 4 510 690 A1**
(43) Date of publication of application: **19.02.2025**
(21) Application number: 23814818.3
(22) Date of filing: 20.04.2023
(51) Int. Cl.: H04W 24/10

(54) **SDT EVENT RECORDING METHOD, APPARATUS, AND STORAGE MEDIUM**

(30) Priority: 31.05.2022 CN 202210612738
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Gill Jennings & Every LLP
(86) International application number: PCT/CN2023/089503
(87) International publication number: WO 2023/231632

(57) **Abstract**

This application provides an SDT event recording method, an apparatus, and a storage medium, and is applied to the field of communication technologies. The SDT event recording method provided in this application includes: First, a terminal device receives a first message from a network device. The first message includes a first parameter set, and the first parameter set includes one or more parameters for recording transmission characteristic information in an SDT period. Then, the terminal device records the transmission characteristic information corresponding to the one or more parameters in the first parameter set based on the first message. The method provides a processing solution for how to record, when SDT is performed, an event that occurs, to help locate a problem occurring in the SDT period.

## Description

This application claims priority to Chinese Patent Application No. 202210612738.8, filed with the China National Intellectual Property Administration on May 31, 2022 and entitled "SDT EVENT RECORDING METHOD, APPARATUS, AND STORAGE MEDIUM", which is incorporated herein by reference in its entirety.

### TECHNICAL FIELD

This application relates to the field of communication technologies, and in particular, to an SDT event recording method, an apparatus, and a storage medium.

### BACKGROUND

In a new radio (new radio, NR) system, to reduce resource consumption for frequent transmission of small data packets and improve transmission efficiency, an inactive state (inactive state), which may also be referred to as an RRC inactive state (RRC inactive state), is introduced at a radio resource control (radio resource control, RRC) level.

In a conventional solution, in the RRC inactive state, when data needs to be sent, a terminal device triggers an RRC resume request (RRC resume request) procedure to resume an RRC connected state (RRC connected state), and then the terminal device sends the data in the RRC connected state.

With development of technologies, a technology that can enable the terminal device to transmit data in the RRC inactive state is currently proposed. This technology is referred to as small data transmission or small data transmission (small data transmission, SDT). However, there is currently no solution proposed on how to record an SDT event, for example, record a reason for SDT failure. In this case, it is possible that a problem occurring in SDT cannot be accurately located in a timely manner, or an SDT configuration parameter cannot be adjusted or optimized in a timely manner. Therefore, how to record the SDT event is an urgent problem to be resolved currently.

### SUMMARY

This application provides an SDT event recording method, an apparatus, and a storage medium, to resolve a problem that an SDT event cannot be recorded.

According to a first aspect, an SDT event recording method is provided. The method includes: A terminal device receives a first message from a network device, where the first message includes a first parameter set, and the first parameter set includes one or more parameters for recording transmission characteristic information in an SDT period; and the terminal device records the transmission characteristic information corresponding to the one or more parameters in the first parameter set based on the first message. Based on the SDT event recording method provided in this embodiment of this application, when performing SDT, the terminal device may record transmission status information based on an indication of the network device, to help locate a problem occurring in the SDT period, and optimize an SDT configuration parameter.

With reference to the first aspect, in a possible design, the first parameter set includes at least one first parameter, and the first parameter is used to indicate to record a measurement value of a beam signal of a serving cell.

With reference to the first aspect, in a possible design, SDT includes configured grant-small data transmission CG-SDT or random access channel-small data transmission RACH-SDT; and the first parameter set includes at least one second parameter, and the second parameter is used to indicate to record an event of the CG-SDT and/or an event of the RACH-SDT.

With reference to the first aspect, in a possible design, the event of the CG-SDT includes one or more of the following: After sending data to the network device on a CG resource, the terminal device receives no feedback information; when the terminal device sends data to the network device on a CG resource, a signal value of a target cell is less than a preset threshold, or a signal value of a target beam is less than a preset threshold; a quantity of times the terminal device sends data to the network device on a CG resource reaches a maximum quantity of retransmissions; after sending a layer 3 L3 message and/or data to the network device on a CG resource, the terminal device starts a CG-SDT timer, and before the CG-SDT timer expires, receives no acknowledgment message, layer 2 L2 message, L3 message, or scheduled data from the network device; or a timing advance TA timer of the terminal device expires, and a CG resource becomes unavailable.

With reference to the first aspect, in a possible design, the event of the RACH-SDT includes one or more of the following: a reason for failing to send Msg3 and data to the network device by the terminal device; or a quantity of times the terminal device fails to send Msg3 and data to the network device and/or a total quantity of times the terminal device sends Msg3 and the data to the network device. The total quantity of times includes the quantity of times of failing to send Msg3 and the data and a quantity of times of successfully sending Msg3 and the data.

With reference to the first aspect, in a possible design, the first message is a measurement record configuration message.

According to a second aspect, an SDT event recording method is provided. The method includes: A terminal device receives a second message from a network device, where the second message includes a second parameter set, and the second parameter set includes one or more parameters indicating to record service characteristic information in an SDT period; and the terminal device records service information corresponding to each parameter in the second parameter set based on the first message. Based on the SDT event recording method provided in this embodiment of this application, when performing SDT, the terminal device may record service characteristic information based on an indication of the network device, to help locate a problem occurring in the SDT period, and optimize an SDT configuration parameter.

With reference to the second aspect, in a possible design, the service characteristic information includes at least one of the following: a cache of the terminal device, a frequency at which the terminal device sends data to the network device, data sent by the terminal device to the network device exceeding a preset threshold, a frequency at which the terminal device transmits data to the network device in segments, a time and/or a frequency at which the terminal device receives an MT-SDT message from the network device, a movement trajectory of the terminal device, signal strength of a cell reselected by the terminal device, an event in which the terminal device switches from a first network to a second network in a multi-subscriber identity module Multi-SIM scenario, a reason for entering an idle state by the terminal device, a reason for terminating an SDT session by the terminal device, and an event that triggers the terminal device to request resumption of a radio resource control RRC connected state from the network device.

With reference to the second aspect, in a possible design, the reason for entering the idle state by the terminal device includes: The terminal device triggers radio link failure or the terminal device triggers cell reselection.

With reference to the second aspect, in a possible design, the reason for terminating the SDT session by the terminal device includes: The terminal device receives a first indication message from the network device, where the first indication message is used to indicate the terminal device to enter the idle state or an inactive state; or an SDT timer of the terminal device expires.

With reference to the second aspect, in a possible design, the event that triggers the terminal device to request resumption of the radio resource control RRC connected state from the network device includes at least one of the following: A non-SDT service arrives, the terminal device triggers cell selection or cell reselection, and in the Multi-SIM scenario, the terminal device switches from the second network to the first network.

With reference to the second aspect, in a possible design, the second message is a measurement record configuration message.

According to a third aspect, an SDT event recording method is provided. The method includes: A terminal device receives a third message from a network device, where the third message is used to indicate the terminal device to record an SDT event and/or measure a minimization of drive tests MDT configuration parameter; the terminal device records, based on the third message, the SDT event and/or a measurement result based on the MDT configuration parameter, to obtain a recording result; and the terminal device sends the recording result to the network device.

With reference to the third aspect, in a possible design, the third message is a measurement record configuration message.

With reference to the third aspect, in a possible design, that the terminal device sends the recording result to the network device includes: The terminal device sends a fourth message to the network device, where the fourth message is used to indicate that the terminal device has obtained an available recording result or there is an available recording indication in the terminal device; the terminal device receives a second indication message from the network device, where the second indication message is used to indicate the terminal device to send the recording result to the network device; and the terminal device sends the recording result to the network device based on the second indication message.

With reference to the third aspect, in a possible design, the fourth message is carried in a radio resource control RRC resume request message or an RRC setup request message.

With reference to the third aspect, in a possible design, that the terminal device sends the recording result to the network device includes: The terminal device sends a historical recording result obtained after last SDT ends to the network device in each SDT period.

With reference to the third aspect, in a possible design, the historical recording result is carried in an RRC message or a media access control MAC layer message.

With reference to the third aspect, in a possible design, that the terminal device sends the recording result to the network device includes: The terminal device receives a third indication message from the network device, where the third indication message is used to indicate the terminal device to send the recording result to the network device; and the terminal device sends the recording result to the network device based on the third indication message.

With reference to the third aspect, in a possible design, the third indication message is a terminal information request message; and the recording result is carried in a terminal information response message.

With reference to the third aspect, in a possible design, before the terminal device records the SDT event and measures the MDT configuration parameter based on the third message, the method further includes: An SDT timer of the terminal device starts to run.

With reference to the third aspect, in a possible design, that the terminal device records, based on the third message, the SDT event and/or a measurement result based on the MDT configuration parameter, to obtain a recording result includes: The terminal device records, based on the third message, the SDT event and/or the measurement result based on the MDT configuration parameter; when the SDT timer expires, the terminal device stops recording the SDT event and/or the measurement result based on the MDT configuration parameter; and the terminal device obtains the recording result based on the SDT event and/or the measurement result based on the MDT configuration parameter that are/is recorded in a running period of the SDT timer.

With reference to the third aspect, in a possible design, that the terminal device records, based on the third message, the SDT event and/or a measurement result based on the MDT configuration parameter, to obtain a recording result includes: The terminal device records, based on the third message, the SDT event and/or the measurement result based on the MDT configuration parameter; when an SDT session of the terminal device is terminated, the terminal device stops recording the SDT event and/or the measurement result based on the MDT configuration parameter; and the terminal device obtains the recording result based on the recorded SDT event and/or the recorded measurement result based on the MDT configuration parameter.

With reference to the third aspect, in a possible design, the recording result sent by the terminal device to the network device is an available recording result; and the available recording result is determined by the terminal device based on a quantity of recorded SDT events and/or a quantity of recorded measurement results based on the MDT configuration parameter.

According to a fourth aspect, a communication apparatus is provided to implement the foregoing methods. The communication apparatus may be the terminal device in any design of the first aspect to the third aspect, an apparatus including the terminal device, or an apparatus, for example, a chip, included in the terminal device. Alternatively, the communication apparatus may be the network device in any design of the first aspect to the third aspect, an apparatus including the network device, or an apparatus, for example, a chip, included in the network device. The communication apparatus includes a corresponding module, unit, or means (means) for implementing the foregoing method. The module, unit, or means may be implemented by hardware, by software, or by executing corresponding software by hardware. The hardware or the software includes one or more modules or units corresponding to the foregoing function.

According to a fifth aspect, a communication apparatus is provided, and includes a processor and a memory. The memory is configured to store computer instructions. The processor is configured to execute the instructions stored in the memory. When the processor executes the instructions, the communication apparatus is enabled to perform the method according to any one of the foregoing aspects. The communication apparatus may be the terminal device in any design of the first aspect to the third aspect, an apparatus including the terminal device, or an apparatus, for example, a chip, included in the terminal device. Alternatively, the communication apparatus may be the network device in any design of the first aspect to the third aspect, an apparatus including the network device, or an apparatus, for example, a chip, included in the network device.

According to a sixth aspect, a communication apparatus is provided, and includes a processor and an interface circuit. The interface circuit is configured to communicate with a module other than the communication apparatus. The processor is configured to run a computer program or instructions to perform the method according to any one of the foregoing aspects. The communication apparatus may be the terminal device in any design of the first aspect to the third aspect, an apparatus including the terminal device, or an apparatus, for example, a chip, included in the terminal device. Alternatively, the communication apparatus may be the network device in any design of the first aspect to the third aspect, an apparatus including the network device, or an apparatus, for example, a chip, included in the network device.

Alternatively, the interface circuit may be a code/data read/write interface circuit, and the interface circuit is configured to: receive computer-executable instructions (the computer-executable instructions are stored in a memory, and may be directly read from the memory, or may pass through another component), and transmit the computer-executable instructions to the processor, so that the processor runs the computer-executable instructions to perform the method according to any one of the foregoing aspects.

In some possible designs, the communication apparatus may be a chip or a chip system.

According to a seventh aspect, a communication apparatus is provided, and includes a processor. The processor is configured to: be coupled to a memory, read instructions from the memory, and perform the method according to any one of the foregoing aspects based on the instructions. The communication apparatus may be the terminal device in any design of the first aspect to the third aspect, an apparatus including the terminal device, or an apparatus, for example, a chip, included in the terminal device. Alternatively, the communication apparatus may be the network device in any design of the first aspect to the third aspect, an apparatus including the network device, or an apparatus, for example, a chip, included in the network device.

According to an eighth aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the terminal device in any design of the first aspect to the third aspect, an apparatus including the terminal device, or an apparatus, for example, a chip, included in the terminal device. Alternatively, the communication apparatus may be the network device in any design of the first aspect to the third aspect, an apparatus including the network device, or an apparatus, for example, a chip, included in the network device.

According to a ninth aspect, a computer program product including instructions is provided. When the computer program product is run on a communication apparatus, the communication apparatus is enabled to perform the method according to any one of the foregoing aspects. The communication apparatus may be the terminal device in any design of the first aspect to the third aspect, an apparatus including the terminal device, or an apparatus, for example, a chip, included in the terminal device. Alternatively, the communication apparatus may be the network device in any design of the first aspect to the third aspect, an apparatus including the network device, or an apparatus, for example, a chip, included in the network device.

According to a tenth aspect, a communication apparatus (for example, the communication apparatus may be a chip or a chip system) is provided. The communication apparatus includes a processor, configured to implement the function in any one of the foregoing aspects. In a possible design, the communication apparatus further includes a memory. The memory is configured to store necessary program instructions and data. When being a chip system, the communication apparatus may include a chip, or may include a chip and another discrete device.

According to an eleventh aspect, a communication system is provided. The communication system includes a terminal device and a network device. The terminal device may perform the method in any design of the first aspect to the third aspect, and the network device may perform the method in any design of the first aspect to the third aspect.

### BRIEF DESCRIPTION OF DRAWINGS

FIG. 1 is an architectural diagram of a communication network according to an embodiment of this application;
FIG. 2 is a schematic diagram of an interaction process of requesting, by UE, to resume an RRC connection according to an embodiment of this application;
FIG. 3 is a flowchart of SDT according to an embodiment of this application;
FIG. 4 is a flowchart of other SDT according to an embodiment of this application;
FIG. 5 is a flowchart of MDT measurement according to an embodiment of this application;
FIG. 6 is a schematic diagram of a structure of a communication system according to an embodiment of this application;
FIG. 7 is a schematic diagram of a structure of a communication apparatus according to an embodiment of this application;
FIG. 8 is a schematic diagram of a hardware structure of UE according to an embodiment of this application;
FIG. 9 is a flowchart of an SDT event recording method according to an embodiment of this application;
FIG. 10 is a flowchart of another SDT event recording method according to an embodiment of this application;
FIG. 11 is a flowchart of still another SDT event recording method according to an embodiment of this application;
FIG. 12 is a flowchart of still another SDT event recording method according to an embodiment of this application;
FIG. 13 is a flowchart of still another SDT event recording method according to an embodiment of this application;
FIG. 14 is a flowchart of still another SDT event recording method according to an embodiment of this application; and
FIG. 15 is a schematic diagram of a structure of another communication apparatus according to an embodiment of this application.

### DESCRIPTION OF EMBODIMENTS

For ease of understanding, several terms and related technologies in this application are briefly described below.

### 1. 5th generation (5th generation, 5G) network architecture

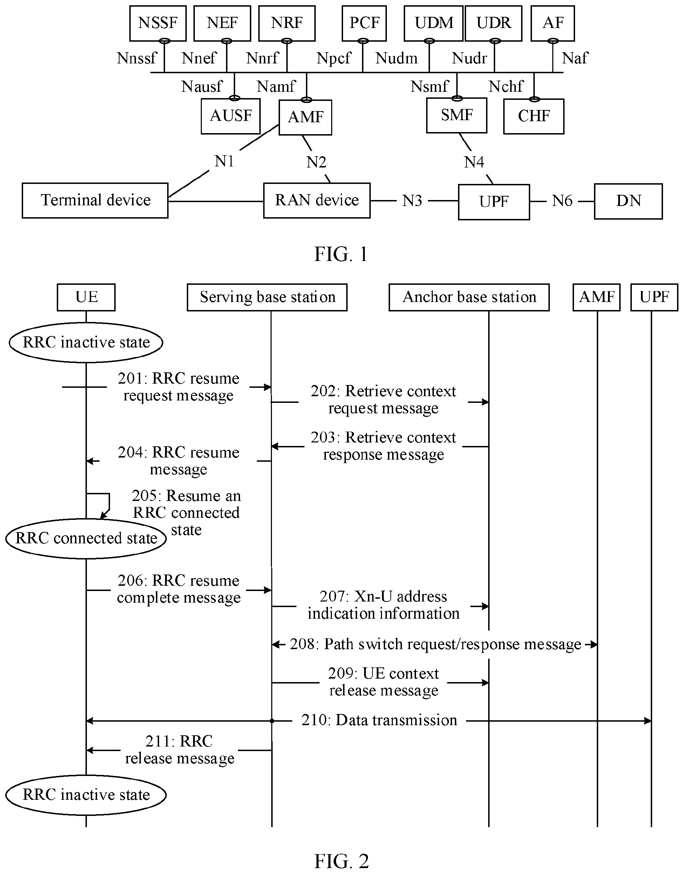

FIG. 1 is a schematic diagram of a service-based architecture of an existing 5G network. The 5G network mainly includes the following network functions and entities: a radio access network (radio access network, RAN) device, a user plane function (user plane function, UPF), a data network (data network, DN), an access and mobility management function (core access and mobility management function, AMF), a session management function (session management function, SMF), an authentication server function (authentication server function, AUSF), a network slice selection function (network slice selection function, NSSF), a network exposure function (network exposure function, NEF), a network repository function (network Repository Function, NRF), a policy control function (policy control function, PCF), unified data management (unified data management, UDM), unified data repository (unified data repository, UDR), an application function (application function, AF), a charging function (charging function, CHF), or the like.

The network function can be used as a network element running on dedicated hardware, a software instance running on dedicated hardware, or a virtual function instantiated on an appropriate platform, for example, implemented on cloud infrastructure.

It should be noted that, FIG. 1 shows only some examples of network elements or entities in the 5G network. The 5G network may further include some network elements or entities that are not shown in FIG. 1, for example, a network data analytics function (network data analytics function, NWDAF). This is not specifically limited in the embodiments of this application.

As shown in FIG. 1, a terminal device accesses the 5G network through the RAN device, and the terminal device communicates with the AMF through an N1 interface (which is briefly referred to as N1); the RAN device communicates with the AMF through an N2 interface (which is briefly referred to as N2); the RAN device communicates with the UPF through an N3 interface (which is briefly referred to as N3); and the SMF communicates with the UPF through an N4 interface (which is briefly referred to as N4), and the UPF accesses the DN through an N6 interface (which is briefly referred to as N6). In addition, control plane functions such as the AUSF, the AMP, the SMF, the NSSF, the NEF, the NRF, the PCF, the UDM, the UDR, the CHF, or the AF shown in FIG. 1 interact through a service-based interface. For example, a service-based interface exhibited by the AUSF is Nausf; a service-based interface exhibited by the AMF is Namf; a service-based interface exhibited by the SMF is Nsmf; a service-based interface exhibited by the NSSF is Nnssf; a service-based interface exhibited by the NEF is Nnef; a service-based interface exhibited by the NRF is Nnrf; a service-based interface exhibited by the PCF is Npcf; a service-based interface exhibited by the UDM is Nudm; a service-based interface exhibited by the UDR is Nudr; a service-based interface exhibited by the CHF is Nchf; and a service-based interface exhibited by the AF is Naf. For related function descriptions and interface descriptions, refer to the 5G system architecture (5G system architecture) diagram in the 23501 standard. Details are not described herein again.

Functions, in the 5G network, of the parts or the network elements in the foregoing network architecture are separately described below by using examples.
(1) The RAN device is configured to provide a network access function for an authorized terminal device in a specific area, and can use transmission tunnels of different quality based on a level of the terminal device, a service requirement, and the like. The RAN device can manage a radio resource, and provide an access service for the terminal device, to complete forwarding of a control signal and terminal data between the terminal and a core network. The RAN device may alternatively be understood as a base station in a conventional network. For example, the RAN device may be responsible for functions such as radio resource management on an air interface side, quality of service (quality of service, QoS) management, and data compression and encryption.
   The RAN device may be a device in a wireless network. The RAN device may also be referred to as a radio RAN device or a network device. Currently, some examples of the RAN device are a next generation NodeB (Next Generation Node B, gNB) or a transmission and reception point (transmission and reception point, TRP) in a 5G system, an evolved NodeB (evolved Node B, eNB) in a long term evolution (long term evolution, LTE) system, a radio network controller (radio network controller, RNC), a NodeB (Node B, NB), a base station controller (base station controller, BSC), a base transceiver station (base transceiver station, BTS), a home base station (for example, a home evolved NodeB or a home Node B, HNB), a baseband unit (baseband unit, BBU), a wireless fidelity (wireless fidelity, Wi-Fi) access point (access point, AP), or the like. In a network structure, the network device may include a centralized unit (centralized unit, CU) node or a distributed unit (distributed unit, DU) node, or a RAN device including a CU node and a DU node. The RAN device may alternatively be a wireless backhaul device, a vehicle-mounted device, a wearable device, a network device in a future 5G network, a network device in a future evolved PLMN network, or the like, and is referred to as a NodeB (Node B) or the like in a 3rd generation (3rd generation, 3G) system.
(2) A mobility management network element is a core network element, and is mainly responsible for a signaling processing part, for example, functions such as access control, mobility management, attach and detach, and gateway selection. When providing a service for a session of a terminal, the mobility management network element provides a control plane storage resource for the session, to store a session identifier, an SMF network element identifier associated with the session identifier, and the like. In a 5G communication system, the mobility management network element may be an access and mobility management function (access and mobility management function, AMF) network element. In a future communication system, the mobility management network element may still be an AMF network element, or may have another name. This is not limited in this application.
(3) A user plane network element is used for packet routing and forwarding, quality of service (quality of service, QoS) handling for user plane data, and the like. In a 5G communication system, a network element or an entity corresponding to the user plane network element may be a user plane function (user plane function, UPF) network element in a 5G network architecture. In a future communication system, the user plane network element may still be a UPF network element or a user plane network element, or has another name. This is not limited in the embodiments of this application.

For descriptions of functions and the like of network elements such as the DN, the SMF, the AUSF, the NSSF, the NEF, the NRF, the PCF, the UDM, the UDR, the AF, and the CHF, refer to explanations and descriptions in a conventional technology. Details are not described herein again.

### 2. RRC state

Three RRC states are defined in a 5G NR system: an inactive state, a connected state, and an idle (IDLE) state. The three states are described as follows:
(1) The connected state is an RRC_CONNECTED state, and is also referred to as a connected state or an RRC connected state. The connected state means that an RRC connection between a terminal device and an access network is established. When the terminal device is in the connected state, a connection between the terminal device and each of the access network (for example, a base station) and a core network (for example, an AMF) is established. If data needs to be transmitted, the data may be directly transmitted by using the established connection. The RRC connection is used to process a control plane message between the terminal device and the access network.
(2) The inactive state is an RRC_INACTIVE state, and is also referred to as an inactive state or a third state. The inactive state means that an RRC connection between a terminal device and an access network (for example, a base station) is broken, but a connection between the access network corresponding to the terminal device and a core network is not broken. In a conventional solution, when the terminal device is in the inactive state, if data needs to be transmitted, the RRC connection between the terminal device and the access network needs to be first resumed before the data can be transmitted.
   After the terminal device enters the inactive state, context (context) of the terminal device is suspended (suspend) on a terminal device side and a base station side, and the context of the terminal device is stored in a last cell on which the terminal device camps before entering the inactive state, or is stored in a cell (which is also referred to as an anchor (anchor) cell) that last provides a service for the terminal device. When there is a data and/or signaling transmission requirement, the terminal device may initiate an RRC resume request (RRC resume request) to obtain the context of the terminal device, so as to resume the RRC connection based on the context of the terminal device. For example, the context of the terminal device includes security context of the terminal device and capability information of the terminal device.
(3) The idle state is RRC_IDLE. The idle state means that no RRC connection between a terminal device and an access network device (for example, a base station) is established, and no connection between the access network device (for example, a base station) corresponding to the terminal device and a core network device (for example, an AMF) is established. When the terminal device is in the idle state, if data needs to be transmitted, a connection between the UE and the access network device (for example, a base station) and a connection between the access network device (for example, a base station) and the core network device (for example, an AMF) need to be first established before the data can be transmitted.

In addition, a base station to which a cell on which the terminal device currently camps belongs or a base station that currently provides a service for the terminal device may be referred to as a serving base station (Serving-gNB). A base station to which a last cell on which the terminal device camps before entering an inactive state belongs or a base station that last provides a service for the terminal device before the terminal device enters an inactive state may be referred to as an anchor base station (Anchor-gNB). It should be noted that, the terminal device has mobility. After entering the inactive state, the terminal device may move. Therefore, the serving base station and the anchor base station of the terminal device may be different.

### 3. Switching from an RRC inactive state to an RRC connected state

In a conventional solution, if a terminal device needs to send data in the RRC inactive state, the terminal device may first switch to the RRC connected state, and then send the data and/or signaling. For example, the terminal device is user equipment (user equipment, UE). FIG. 2 shows a complete procedure of switching from the RRC inactive state to the RRC connected state and transmitting data. As shown in FIG. 2, the switching procedure may include the following steps.

Step 201: The terminal device in the RRC inactive state sends an RRC resume request (RRC Resume Request) message to a serving base station.

Step 202: If the serving base station of the terminal device is not an anchor base station of the terminal device, the serving base station sends a retrieve context request (Retrieve UE CONTEXT REQUEST) message to the anchor base station, to request context of the terminal device.

Step 203: The anchor base station sends a retrieve context response (Retrieve UE CONTEXT RESPONSE) message to the serving base station, where the message includes the context of the terminal device.

Step 204: After receiving the retrieve context response message, the serving base station sends an RRC resume (RRC Resume) message to the terminal device, so that the terminal device switches to the RRC connected state.

Step 205: After receiving the RRC resume message, the terminal device switches to the RRC connected state.

Step 206: After resuming the RRC connected state, the terminal device sends an RRC resume complete (RRC resume complete) message to the serving base station.

Step 207: After receiving the RRC resume complete message, the serving base station sends Xn interface address indication (Xn-U address indication) information to the anchor base station.

Step 208: The serving base station sends a path switch request (path switch request) message to an AMF, and receives a path switch response (path switch response) message, to perform path switch, so that a path of a core network device is switched to the serving base station.

Step 209: After path switch, the serving base station sends a UE context release (UE context release) message to the anchor base station, to indicate the anchor base station to release the context of the terminal device.

It should be understood that after step 208, the serving base station becomes a new anchor base station. Therefore, the original anchor base station (that is, the anchor base station in FIG. 2) does not need to retain the context of the terminal device, and therefore can release the context of the terminal device.

Step 210: After path switch, the terminal device in the RRC connected state may perform data transmission with a UPF.

Step 211: After data transmission is completed, the serving base station (which is also an anchor base station) may send an RRC release (RRC release) message to the terminal device, so that the terminal device switches to the RRC inactive state.

The RRC release message may include a suspend configuration (suspendconfig), to indicate the terminal device to suspend the context of the terminal device.

If the terminal device that resumes the inactive state needs to send data again, step 201 to step 211 may be performed again.

However, it may be learned from steps 201 to 211 that if data transmission is relatively frequently performed, the terminal device needs to frequently switch between the inactive state and the connected state, and consequently a large quantity of signaling resources are occupied. However, occupation of a large quantity of signaling resources for transmitting small data packets leads to a waste of signaling resources. Therefore, in a possible implementation, an SDT technology is proposed, so that the terminal device can transmit data in the RRC inactive state.

### 4. SDT

Currently, there may be two scenarios, that is, a scenario 1 and a scenario 2, in which a terminal device performs SDT in an inactive state. In the scenario 1, after the terminal device ends SDT, a serving base station migrates a status of the terminal device to a connected state. In the scenario 2, after the terminal device ends SDT, a serving base station configures a status of the terminal device as the inactive state or an idle state.

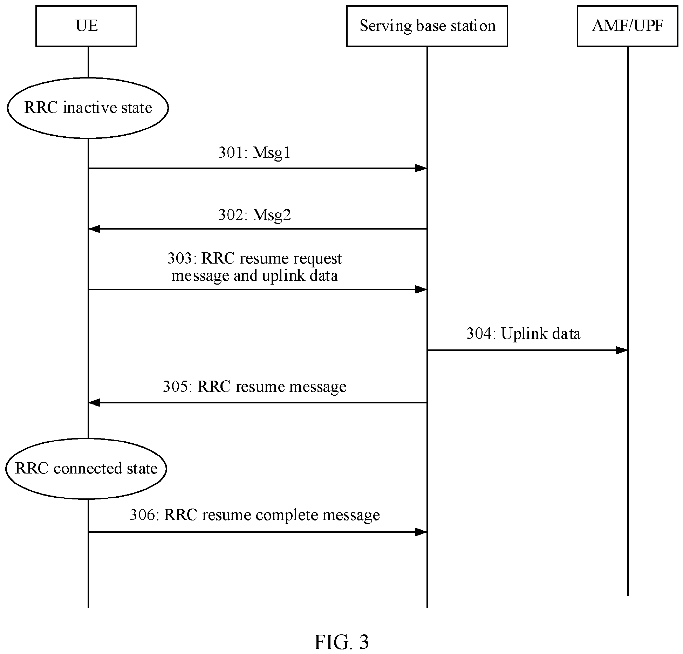

For example, FIG. 3 is a flowchart of performing SDT in the scenario 1. An example in which the terminal device is UE is used. As shown in FIG. 3, the process may include the following steps.

Step 301: The terminal device is in the inactive state. If no configured grant (configured grant, CG) resource is configured for the terminal device or a CG resource is unavailable, the terminal device triggers a random access (random access, RA) procedure, and sends a message 1 (message1, Msg1) to the serving base station, to request a resource for sending data.

Step 302: The serving base station sends a message 2 (message2, Msg2), that is, a random access response (random access response, RAR) message, to the terminal device. The RAR message carries an uplink grant (uplink grant, UL grant).

Step 303: The terminal device sends a message 3 (message3, Msg3), that is, an RRC resume request message and uplink data that needs to be transmitted, to the serving base station. The RRC resume request message may be used to request to perform SDT, or the RRC resume request message may be used to request to establish an SDT session. In an SDT session period (which may also be referred to as an SDT period), the UE in the inactive state may send data to the serving base station.

Optionally, the uplink data may be carried in the RRC resume request message, or the uplink data and the RRC resume request message may be encapsulated in a same message.

Step 304: The serving base station forwards the received uplink data to a core network (UPF).

Step 305: After data transmission is completed, the serving base station sends an RRC resume message to the terminal device, where the RRC resume message may be used to configure the UE to switch to the RRC connected state.

Step 306: After receiving the RRC resume message, the terminal device terminates the SDT session (ends SDT), and switches to the RRC connected state. After resuming the RRC connected state, the terminal device sends an RRC resume complete message to the serving base station.

Optionally, after step 306, the serving base station may further configure the terminal device as the inactive state or an idle state.

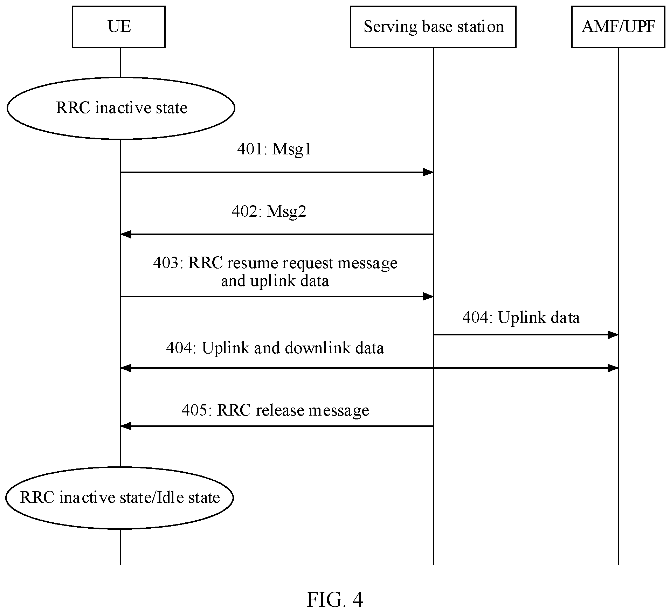

For another example, FIG. 4 is a flowchart of performing SDT in the scenario 2. As shown in FIG. 4, the process may include the following steps.

Step 401: If no CG resource is configured for the terminal device or a CG resource is unavailable, the terminal device triggers a RA procedure, and sends Msg1 to the serving base station, to request a resource for sending data.

Step 402: The serving base station sends Msg2, that is, a RAR message, to the terminal device. The RAR message carries a UL grant.

Step 403: The terminal device in the inactive state sends Msg3, that is, an RRC resume request message and uplink data that needs to be transmitted, to the serving base station. The RRC resume request message may be used to request to perform SDT, that is, the RRC resume request message may be used to request to establish an SDT session. In an SDT session period (which may also be referred to as an SDT period), the UE in the inactive state may send data to the serving base station.

Optionally, the uplink data may be carried in the RRC resume request message, or the uplink data and the RRC resume request message may be encapsulated in a same message.

Step 404: The serving base station forwards the received uplink data to a core network (UPF), and transmits uplink and downlink data that is between the core network and the terminal device and that arrives subsequently.

Step 405: After data transmission is completed, the serving base station sends an RRC release message to the terminal device, to configure the terminal device to enter the inactive state or the idle state. After receiving the RRC release message, the terminal device ends SDT (terminates the SDT session), and enters the inactive state or the idle state based on an indication of the RRC release message.

It should be noted that, as shown in FIG. 3 or FIG. 4, a manner in which the terminal device obtains, by using the random access procedure, a resource used for SDT is referred to as random access channel-small data transmission (random access channel, RACH-SDT). Different from the RACH-SDT procedure shown in FIG. 3 or FIG. 4, the terminal device may further perform SDT by using a configured grant-small data transmission (CG-SDT) procedure. In the CG-SDT procedure, an available CG resource is configured for the terminal device, and signaling or data may be directly and successfully sent on the available CG resource without triggering random access to request a resource. For example, in the scenario 1, the CG-SDT procedure does not need to include step 301 and step 302 in FIG. 3, and the terminal device may directly implement step 303 based on the available CG resource, to implement subsequent steps 304-306. In the scenario 2, the CG-SDT procedure does not need to include step 401 and step 402 in FIG. 4, and the terminal device may directly implement step 403 based on the CG resource, to implement subsequent steps 404-405.

5. Logged minimization of drive tests (Logged-minimization of drive tests, Logged-MDT)

Logged-MDT is a technology for collecting a related measurement quantity of a terminal device in an idle state or an inactive state, for example, measuring signal quality of a cell and recording a random access failure event, to assist in locating a reason for a problem.

When the terminal device is in a connected state, a serving base station may send a measurement record configuration (logged measurement configuration) message to the terminal device. The logged measurement configuration message includes MDT measurement configuration information, and may indicate an MDT configuration parameter that needs to be measured by the terminal device. After receiving the logged measurement configuration message, the terminal device may perform corresponding measurement based on the logged measurement configuration message after entering the idle state or the inactive state, and record a measurement result, to obtain an MDT measurement record (which may also be referred to as "to obtain an MDT measurement result"). After obtaining the MDT measurement record, the terminal device may add an indication message indicating that the terminal device performs available MDT measurement to an RRC resume request message, and send the RRC resume request message to the base station. After receiving the RRC resume request message, the base station may configure the terminal device to resume the RRC connected state, and may learn, based on the indication message carried in the RRC resume request message, that there is an MDT measurement record in the terminal device, to send an MDT measurement record reporting request message to the terminal device that resumes the connected state, so as to indicate the terminal device to report the MDT measurement record. After receiving the MDT measurement record reporting request message, the terminal device sends the MDT measurement record to the base station.

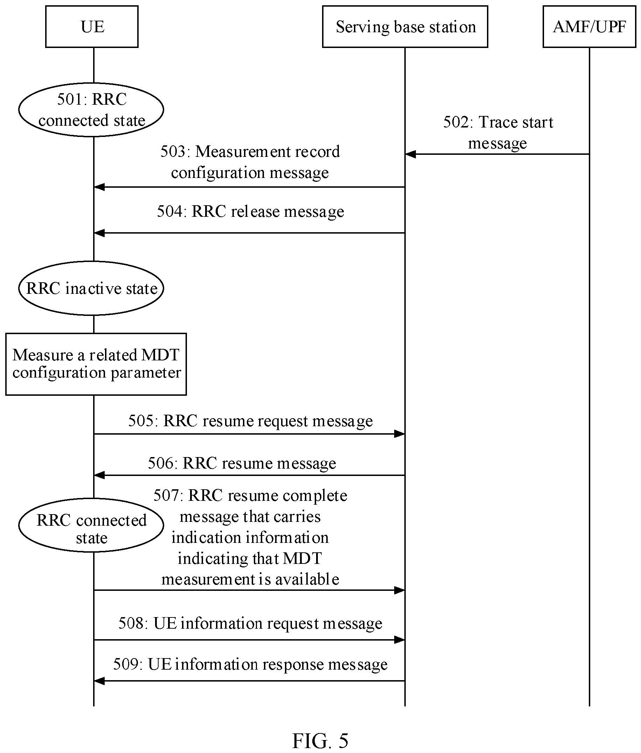

For example, a complete MDT workflow is described below with reference to FIG. 5. As shown in FIG. 5, the procedure may include the following steps.

Step 501: The terminal device enters the connected state.

Step 502: The serving base station receives a trace start (trace start) message from a core network device (for example, an AMF or a UPF), to trigger the serving base station to send configured MDT measurement configuration information to the terminal device.

It should be noted that, that the serving base station receives a trace start message from a core network device shown in FIG. 5 is merely an example manner of triggering the serving base station to deliver the MDT measurement configuration information. Other triggering mechanisms, for example, may be various triggering mechanisms such as another mechanism of triggering by the core network device, a mechanism of triggering by a network management platform, or a mechanism of triggering by the serving base station, are not limited in this application.

In addition, it should be noted that, performing step 502 after step 501 shown in FIG. 5 is merely an example sequence. If the serving base station receives a triggering message to trigger the serving base station to deliver the MDT measurement configuration information, an occasion on which the serving base station receives the triggering message is not limited in this application. That is, the occasion on which the serving base station receives the triggering message is not related to a status of the terminal device. The serving base station may receive the triggering message when the terminal device is in any one of the connected state, the inactive state, or the idle state. However, it should be noted that, the serving base station sends the MDT measurement configuration information to the terminal device after the terminal device enters the connected state.

Step 503: The serving base station sends, to the terminal device, a logged measurement configuration message that carries the MDT measurement configuration information.

Step 504: The serving base station sends an RRC release message to the terminal device, so that the terminal device enters the inactive state. The terminal device starts to measure a related MDT configuration parameter based on the logged measurement configuration message, to obtain a measurement record.

Step 505: The terminal device sends an RRC resume request message to the serving base station, to request resumption of the RRC connected state.

Step 506: The serving base station replies to the terminal device with an RRC resume message. After receiving the RRC resume message, the terminal device switches to the RRC connected state.

Step 507: The terminal device sends an RRC resume complete message to the serving base station, where the RRC resume complete message carries an indication message indicating that MDT-related measurement is available.

Step 508: The serving base station sends a UE information request (UE information request) message, to request the terminal device to report a related MDT measurement record.

Step 509: The terminal device sends a response message, that is, a UE information response (UE information response) message, of the UE information request message to the serving base station, where the UE information response message carries the related MDT measurement record.

The logged-MDT measurement procedure is described above. However, a related parameter of the terminal device in the idle state or the inactive state is recorded in logged-MDT. For an SDT technology, there is currently no solution for recording an event or a condition that occurs in an SDT process, for example, recording a reason for SDT failure. In this case, it is possible that a problem occurring in SDT cannot be accurately located in a timely manner, or an SDT configuration parameter cannot be adjusted or optimized in a timely manner. Therefore, how to record an SDT event is an urgent problem to be resolved currently.

Based on the problem of how to record an SDT event raised above, the embodiments of this application provide an SDT event recording method, to record an event or a condition that occurs in an SDT procedure (which may also be referred to as an SDT period), so as to accurately locate, in a timely manner, a problem occurring in the SDT period, and optimize an SDT configuration parameter.

Technical solutions in embodiments of this application are described below with reference to the accompanying drawings in the embodiments of this application. In the descriptions of this application, unless otherwise specified, "/" indicates an "or" relationship between associated objects. For example, A/B may indicate A or B. In this application, "and/or" is merely an association relationship for describing associated objects, and indicates that three relationships may exist. For example, A and/or B may indicate the following three cases: only A exists, both A and B exist, and only B exists, where A and B may be singular or plural. In addition, in the descriptions of this application, unless otherwise specified, "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, to clearly describe the technical solutions in the embodiments of this application, words such as "first" and "second" are used in the embodiments of this application to distinguish between same items or similar items that provide basically same functions and roles. A person skilled in the art may understand that the words such as "first" and "second" do not limit a quantity and an execution sequence, and the words such as "first" and "second" do not indicate a definite difference. In addition, in the embodiments of this application, the word such as "example" or "for example" is used to represent giving an example, an illustration, or a description. Any embodiment or design solution described as an "example" or "for example" in the embodiments of this application should not be explained as being more preferred or having more advantages than another embodiment or design solution. Exactly, use of the word such as "example" or "for example" is intended to present a related concept in a specific manner, to facilitate understanding.

In addition, the network architecture and the service scenario described in the embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of new service scenarios, the technical solutions provided in the embodiments of this application are also applicable to similar technical problems.

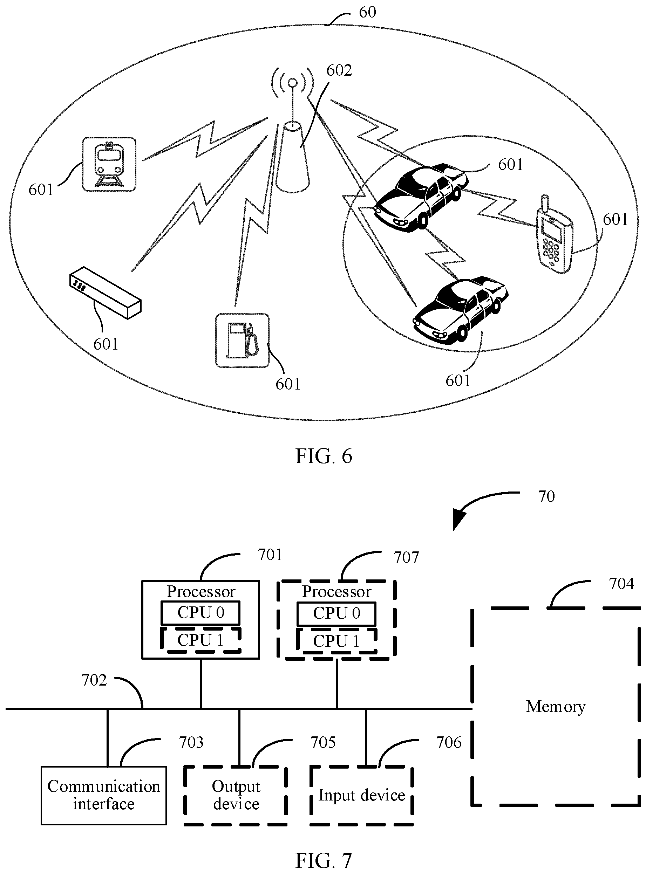

FIG. 6 shows a communication system according to an embodiment of this application. As shown in FIG. 6, the communication system includes a terminal device 601 and a network device 602. The network device 602 is an access network device that currently provides a service for the terminal device 601. For details, refer to the foregoing descriptions of the serving base station.

Optionally, a 5G communication system is used as an example. A possible schematic diagram of a network architecture that corresponds to the communication system shown in FIG. 6 and that is applicable to this embodiment of this application may be shown in FIG. 1. For example, the terminal device 601 may be the terminal device in FIG. 1, and the network device 602 may be the RAN device shown in FIG. 1.

The system architecture described in the embodiments of this application is intended to describe the technical solutions in the embodiments of this application more clearly, and does not constitute a limitation on the technical solutions provided in the embodiments of this application. A person of ordinary skill in the art may learn that with evolution of the network architecture and emergence of new service scenarios, the technical solutions provided in the embodiments of this application are also applicable to similar technical problems.

The network device in the embodiments of this application is a device that connects a terminal device to a wireless network. In this application, if no special descriptions are provided, the network device is a radio access network device. The network device 602 may be a base station (base station), an evolved NodeB (evolved NodeB, eNodeB), a transmission and reception point (transmission and reception point, TRP), a next generation NodeB (next generation NodeB, gNB) in a 5G mobile communication system, a base station in a future mobile communication system, an access node in a wireless fidelity (wireless fidelity, Wi-Fi) system, or the like; or may be a module or a unit that completes some functions of a base station, for example, a central unit (central unit, CU) or a distributed unit (distributed unit, DU). In addition, the network device may alternatively be a broadband network gateway (broadband network gateway, BNG), an aggregation switch, or a non-3GPP access device. The network device may alternatively be a wireless controller in a cloud radio access network (cloud radio access network, CRAN), a transmission and reception point (transmission and reception point, TRP), a device including a TRP, or the like. A specific technology and a specific device form used by the network device are not limited in the embodiments of this application.

The terminal device in the embodiments of this application may be a device with a wireless transceiver function. The terminal device may be deployed on land, including indoors, outdoors, handheld, or vehicle-mounted; may be deployed on a water surface (for example, a ship); or may be deployed in the air (for example, on an aircraft, a balloon, or a satellite). The terminal device may be user equipment (user equipment, UE), an access terminal, a terminal unit, a subscriber unit (subscriber unit), a terminal station, a mobile station (Mobile Station, MS), a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed. A specific type and structure of the terminal are not limited in the embodiments of this application.

Optionally, the terminal device 601 and the network device 602 in this embodiment of this application may use a composition structure shown in FIG. 7 or include a part shown in FIG. 7. FIG. 7 is a schematic diagram of a structure of a communication apparatus 70 according to an embodiment of this application. As shown in FIG. 7, the communication device 70 includes one or more processors 701, a communication line 702, and at least one communication interface (in FIG. 7, only an example in which a communication interface 703 and one processor 701 are included is used for description), and optionally, may further include a memory 704.

The processor 701 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 702 may include a channel for communication between different components.

The communication interface 703 may be a transceiver module, and is configured to communicate with another device or a communication network such as Ethernet, a RAN, or a wireless local area network (wireless local area network, WLAN). For example, the transceiver module may be an apparatus such as a transceiver or a transceiver machine. Optionally, the communication interface 703 may alternatively be a transceiver circuit located in the processor 701, to implement signal input and signal output of the processor.

The memory 704 may be an apparatus with a storage function. For example, the memory 704 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor by using the communication line 702. The memory may alternatively be integrated with the processor.

The memory 704 is configured to store computer-executable instructions for executing the solutions of this application, and the processor 701 controls the execution. The processor 701 is configured to execute the computer-executable instructions stored in the memory 704, to implement the SDT event recording method provided in the embodiments of this application.

Alternatively, optionally, in this embodiment of this application, the processor 701 may perform a processing-related function in the SDT event recording method provided in the following embodiments of this application. The communication interface 703 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

In a specific implementation, in an embodiment, the processor 701 may include one or more CPUs, for example, a CPU 0 and a CPU 1 in FIG. 7.

In a specific implementation, in an embodiment, the communication apparatus 70 may include a plurality of processors, for example, the processor 701 and a processor 707 in FIG. 7. Each of these processors may be a single-core (single-core) processor or a multi-core (multi-core) processor. The processor herein may include but is not limited to at least one of the following: various computing devices that run software, for example, a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform operations or processing.

In a specific implementation, in an embodiment, the communication apparatus 70 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive input from a user in a plurality of manners. For example, the input device 706 may be a mouse, a keyboard, a touchscreen device, or a sensing device.

The communication apparatus 70 sometimes may also be referred to as a communication device, and may be a general-purpose device or a dedicated device. For example, the communication apparatus 70 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 7. A type of the communication apparatus 70 is not limited in this embodiment of this application.

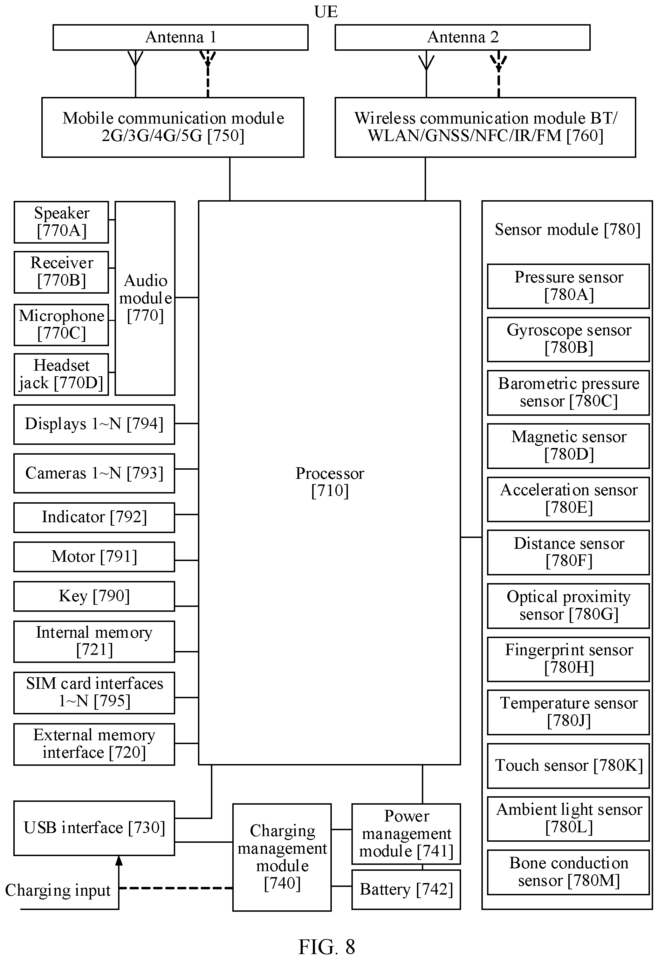

Optionally, FIG. 8 is a schematic diagram of a hardware structure of UE. As shown in FIG. 8, in some embodiments, the structure of the UE may be shown in FIG. 8. The UE may include a processor 710, an external memory interface 720, an internal memory 771, a universal serial bus (universal serial bus, USB) interface 730, a charging management module 740, a power management unit 741, a battery 742, an antenna 1, an antenna 2, a mobile communication module 750, a wireless communication module 760, an audio module 770, a speaker 770A, a receiver 770B, a microphone 770C, a headset jack 770D, a sensor module 780, a key 790, a motor 791, an indicator 792, a camera 793, a display 794, a subscriber identification module (subscriber identification module, SIM) card interface 795, and the like. The sensor module 780 may include a pressure sensor 780A, a gyroscope sensor 780B, a barometric pressure sensor 780C, a magnetic sensor 780D, an acceleration sensor 780E, a distance sensor 780F, an optical proximity sensor 780G, a fingerprint sensor 780H, a temperature sensor 780J, a touch sensor 780K, an ambient light sensor 780L, a bone conduction sensor 780M, and the like.

It may be understood that the structure shown in this embodiment does not constitute a specific limitation on the UE. In some other embodiments, the UE may include more or fewer parts than those shown in the figure, some parts may be combined, some parts may be split, or different part arrangements may be used. The parts shown in the figure may be implemented by hardware, software, or a combination of software and hardware.

The processor 710 may include one or more processing units. For example, the processor 710 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The charging management module 740 is configured to receive charging input from a charger. The charger may be a wireless charger or a wired charger.

The power management module 741 is configured to be connected to the battery 742, the charging management module 740, and the processor 710. The power management module 741 receives input from the battery 742 and/or the charging management module 740, and supplies power to the processor 710, the internal memory 771, the display 794, the camera 793, the wireless communication module 760, and the like.

A wireless communication function of the UE may be implemented by using the antenna 1, the antenna 2, the mobile communication module 750, the wireless communication module 760, the modem, the baseband processor, and the like.

The antenna 1 and the antenna 2 are configured to transmit and receive an electromagnetic wave signal. Each antenna in the UE may be configured to cover one or more communication frequency bands. Different antennas may be further multiplexed, to improve antenna utilization.

The mobile communication module 750 may provide a wireless communication solution that is applied to the UE and that includes 2G/3G/4G/5G or the like.

The wireless communication module 760 may provide a wireless communication solution that is applied to the UE and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 760 may be one or more components into which at least one communication processing module is integrated. The wireless communication module 760 receives an electromagnetic wave through the antenna 2, performs frequency modulation and filtering processing on an electromagnetic wave signal, and sends a processed signal to the processor 710. The wireless communication module 760 may further receive a to-be-sent signal from the processor 710, perform frequency modulation and amplification on the signal, and convert the signal into an electromagnetic wave for radiation through the antenna 2.

In this embodiment of this application, the wireless communication module 760 may be used by the UE to send, to a network node, a request for resuming an RRC connection and receive a response message from the network node.

The UE implements a display function by using the GPU, the display 794, the application processor, and the like. The GPU is a microprocessor for image processing, and is connected to the display 794 and the application processor.

The display 794 is configured to display an image, a video, and the like. A series of graphical user interfaces (graphical user interface, GUI) may be displayed on the display 794 of the UE.

The UE may implement a shooting function by using the ISP, the camera 793, the video codec, the GPU, the display 794, the application processor, and the like.

The camera 793 is configured to capture a static image or a video.

The external memory interface 720 may be configured to be connected to an external memory card, for example, a Micro SD card, to extend a storage capability of the UE.

The internal memory 771 may be configured to store computer-executable program code. The executable program code includes instructions. The processor 710 runs the instructions stored in the internal memory 771, to perform various functional applications and data processing of the UE.

The UE may implement an audio function, for example, music playing and recording, by using the audio module 770, the speaker 770A, the receiver 770B, the microphone 770C, the headset jack 770D, the application processor, and the like. The UE may further include the pressure sensor 780A, the barometric pressure sensor 780C, the gyroscope sensor 780B, the magnetic sensor 780D, the acceleration sensor 780E, the distance sensor 780F, the optical proximity sensor 780G, the ambient light sensor 780L, the fingerprint sensor 780H, the temperature sensor 780J, the touch sensor 780K, the bone conduction sensor 780M, the key 790, the motor 791, the indicator 792, and the like.

The SIM card interface 795 is configured to be connected to a SIM card. The SIM card may be inserted into the SIM card interface 795 or removed from the SIM card interface 795, to come into contact with and be separated from the UE. The UE may support one or N SIM card interfaces, where N is a positive integer greater than 1. The SIM card interface 795 may support a Nano SIM card, a Micro SIM card, a SIM card, and the like. A plurality of cards may be simultaneously inserted into a same SIM card interface 795. The SIM card interface 795 is also compatible with an external memory card. The UE interacts with a network by using the SIM card, to implement functions such as a call and data communication.

In addition, an operating system, for example, a Harmony^{™} operating system, an iOS^{™} operating system, an Android^{™} operating system, or a Windows^{™} operating system, runs on the foregoing part. An application program may be installed and run on the operating system. In some other embodiments, a plurality of operating systems may run in the UE.

It should be understood that the hardware module included in the UE shown in FIG. 8 is merely described by using an example, and does not constitute a limitation on a specific structure of the UE. Actually, the UE provided in this embodiment of this application may further include another hardware module having an interaction relationship with the hardware module shown in the figure. This is not specifically limited herein. For example, the UE may further include a flash or a micro projection apparatus. For another example, if the UE is a PC, the UE may further include parts such as a keyboard and a mouse.

With reference to FIG. 1 to FIG 8, the SDT event recording method provided in the embodiments of this application is described below. The device in the following embodiments may include the part shown in FIG. 8. The actions, terms, and the like in the embodiments of this application may be mutually referenced. This is not limited. In the embodiments of this application, a name of a message or a name of a parameter in a message exchanged between devices is merely an example. In a specific implementation, another name may be used. This is not limited.

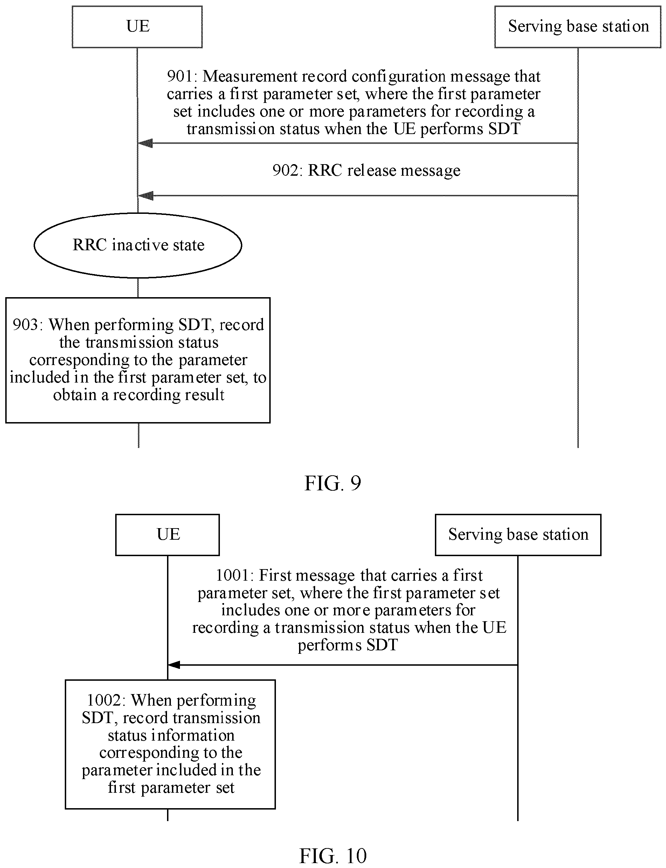

In a possible embodiment, an example in which a network device that provides a service for a terminal device is a serving base station, and the terminal device is UE is used. A flowchart of an SDT event recording method provided in an embodiment of this application may be shown in FIG. 9. With reference to FIG. 9, the SDT event recording method may include the following steps.

Step 901: A serving base station sends a logged measurement configuration message to UE, where the logged measurement configuration message carries a first parameter set, and the first parameter set includes one or more parameters for recording transmission status information when the UE performs SDT (in an SDT period).

For example, in the logged measurement configuration message, the first parameter set may be a SmallDataTransmission-r18 logged field.

Optionally, the logged measurement configuration message may further carry MDT measurement configuration information that may be used by the UE to perform MDT-related measurement. For specific information that may be included in the MDT measurement configuration information, refer to an existing standard or protocol. Details are not described herein again.

In this embodiment of this application, step 901 is performed by the serving base station after delivery of the MDT measurement configuration information is triggered. In addition, when the serving base station performs step 901, the UE needs to be in a connected state.

It should be noted that, a mechanism for triggering the serving base station to deliver the MDT measurement configuration information is not limited in this embodiment of this application. Optionally, a core network device may trigger the serving base station to deliver the MDT measurement configuration information. For example, an AMF or a UPF sends a trace start message to the serving base station. Alternatively, a network management platform may trigger the serving base station to deliver the MDT measurement configuration information. Alternatively, the serving base station may trigger delivery of the MDT measurement configuration information, and so on.

In addition, it should be noted that, if the serving base station receives a triggering message to trigger the serving base station to deliver the MDT measurement configuration information, an occasion on which the serving base station receives the triggering message is not limited in this application. That is, the occasion on which the serving base station receives the triggering message is not related to a status of the UE. The serving base station may receive the triggering message when the UE is in any one of the connected state, an inactive state, or an idle state. However, an occasion on which the serving base station sends the MDT measurement configuration information to the UE is related to the status of the UE. When the serving base station sends the MDT measurement configuration information to the UE, the UE needs to be in the connected state.

In this embodiment of this application, the one or more parameters that are included in the first parameter set and that indicate to record the transmission status information when the UE performs SDT are described below.

Optionally, the first parameter set may include at least one first parameter, and the first parameter is used to indicate to record a measurement value of a beam signal of a serving cell (Serving Cell) when the UE configures a CG-SDT resource. The CG-SDT resource is a CG resource used by the UE to send data or signaling in a CG-SDT procedure. For example, the UE may record, based on the first parameter, a measurement signal value, that is, reference signal receiving power (reference signal receiving power, RSRP)-beam index-synchronization signal block (synchronization signal block, SSB), that is, RSRP-index[n]-SSB, obtained by measuring a beam of the serving cell when the CG-SDT resource is configured, where n represents an index (index) value of the beam.

After receiving the logged measurement configuration message including the first parameter, the UE may record, when configuring the CG resource used for the SDT, the measurement value obtained by measuring the beam signal of the serving cell.

Optionally, the first parameter set may include at least one second parameter, and the second parameter is used to indicate to record an event that occurs when the UE performs CG-SDT and/or RACH-SDT. In the following, an event that occurs when the UE performs CG-SDT is briefly referred to as an event of the CG-SDT (a CG-SDT event), and an event that occurs when the UE performs RACH-SDT is briefly referred to as an event of the RACH-SDT (a RACH-SDT event). For example, the second parameter may indicate to record a failure event of the CG-SDT of the UE. The failure event of the CG-SDT may alternatively be understood as a failure reason for the CG-SDT.

Optionally, the second parameter may be used to indicate to record one or more of the following failure events of the CG-SDT:
1. After sending uplink data to the serving base station on a CG resource, the UE receives no feedback information used as a response of the serving base station. For example, the UE receives no L1 feedback (no L1 feedback) message.
2. When the UE sends uplink data to a serving base station on a CG resource, a signal value of a selected cell (serving cell) is less than a preset threshold, or a signal value of a selected beam (serving beam) is less than a preset threshold.
3. A quantity of times the UE sends data to the serving base station on a CG resource reaches a maximum quantity of retransmissions. The maximum quantity of retransmissions may be configured by the serving base station for the UE by using an RRC message, or the maximum quantity of retransmissions may be predefined in the UE.
4. After sending a layer 3 (layer3, L3) message and data to the serving base station on a CG resource, the UE starts a CG-SDT timer (CG-SDT Timer), and before the CG-SDT timer expires, receives no acknowledgment signaling, layer 2 (layer2, L2) message, L3 message, or scheduled downlink data fed back by the serving base station.

For example, the L3 message sent by the UE to the serving base station may be a media access control layer control element (media access control layer control element, MAC CE), and the L2 message that needs to be fed back by the serving base station may be an acknowledgment message of the MAC CE.

Specifically, if the second parameter indicates to record the failure event, after sending the L3 message and data to the serving base station on the CG resource, and starting the CG-SDT timer, the UE may monitor a physical downlink control channel (physical downlink control channel, PDCCH) to receive signaling or downlink data from the serving base station. If the UE receives no corresponding acknowledgment signaling, L2 message, L3 message, or downlink data, the UE records the failure event.

5. A timing advance (timing advance, TA) timer (TA Timer) expires, and a CG resource becomes unavailable.

Specifically, if the second parameter indicates to record the failure event, and if the UE does not successfully send data on the CG resource after the TA Timer expires, the UE may consider that the CG resource cannot continue to be used, that is, the CG resource is unavailable, and record the failure event. Optionally, a TA may be configured by the serving base station by using a RAR message sent to the UE.

After the UE receives the logged measurement configuration message including the second parameter, if an event that the second parameter indicates to record occurs in the CG-SDT procedure, the UE may record a corresponding CG-SDT event.

Optionally, the second parameter may be used to indicate to record one or more of the following failure events of the RACH-SDT:
1. Reason for failing to send Msg3 and data to the serving base station by the UE: For example, the reason for the failure may be that the UE fails to contend for random access with other UE, a quantity of times the UE sends Msg3 and the data reaches a maximum quantity of retransmissions, or the UE still does not successfully send Msg3 and the data after a RACH-SDT timer (RACH-SDT Timer) expires.
2. Quantity of times the UE fails to send Msg3 and data to the serving base station and/or total quantity of times the UE sends Msg3 and the data to the serving base station, where the total quantity of times includes the quantity of times of failing to send Msg3 and the data and a quantity of times of successfully sending Msg3 and the data:

After the UE receives the logged measurement configuration message including the second parameter, if an event that the second parameter indicates to record occurs in a RACH-SDT procedure, the UE may record a corresponding RACH-SDT event.

Step 902: The serving base station sends an RRC release message to the UE, so that the UE in the connected state enters the inactive state.

Step 903: The UE in the inactive state determines to perform SDT, and when performing SDT, records, based on the logged measurement configuration message, the transmission status information that the parameter included in the first parameter set indicates to record, to obtain a recording result.

In a possible implementation, the UE may record, in a form of a log, the transmission status information when the UE performs SDT, and store the transmission status information.

Optionally, if the logged measurement configuration message carries the MDT measurement configuration information, the UE may further perform related MDT measurement after entering the inactive state, and obtain a measurement result.

Optionally, after obtaining the recording result, the UE may send the recording result to the serving base station or the network management platform. The serving base station or the network management platform may determine, based on the recording result, a transmission status when the UE performs SDT, to implement fast location when a problem occurs in an SDT procedure of the UE. The serving base station or the network management platform may further optimize an SDT configuration parameter or a configuration resource of the UE based on the recording result reported by the UE. For example, based on the recording result from the UE, the serving base station or the network management platform may adjust a configured grant resource size (CG Resource Size), or deliver auxiliary indication information, for example, deliver, based on the recording result, information indicating whether the UE migrates an RRC state in the SDT period.

Based on the SDT event recording method provided in this embodiment of this application, when performing SDT, the UE may record the transmission status information based on an indication of the serving base station, to help locate a problem occurring in the SDT period of the UE, and optimize the SDT configuration parameter.

It should be noted that, the embodiment shown in FIG. 9 is an example description of the SDT event recording method provided in this application. In another possible embodiment, as shown in FIG. 10, the SDT event recording method may include the following steps.

Step 1001: A serving base station sends a first message to UE, where the first message carries a first parameter set, and the first parameter set includes one or more parameters indicating to record transmission status information when the UE performs SDT. For example, the first message may be a logged measurement configuration message.

Step 1002: When performing SDT, the UE records the transmission status information corresponding to the parameter included in the first parameter set.

An implementation of steps 1001-1002 is similar to that of steps 901-903, and reference may be made to the descriptions of steps 901-903.

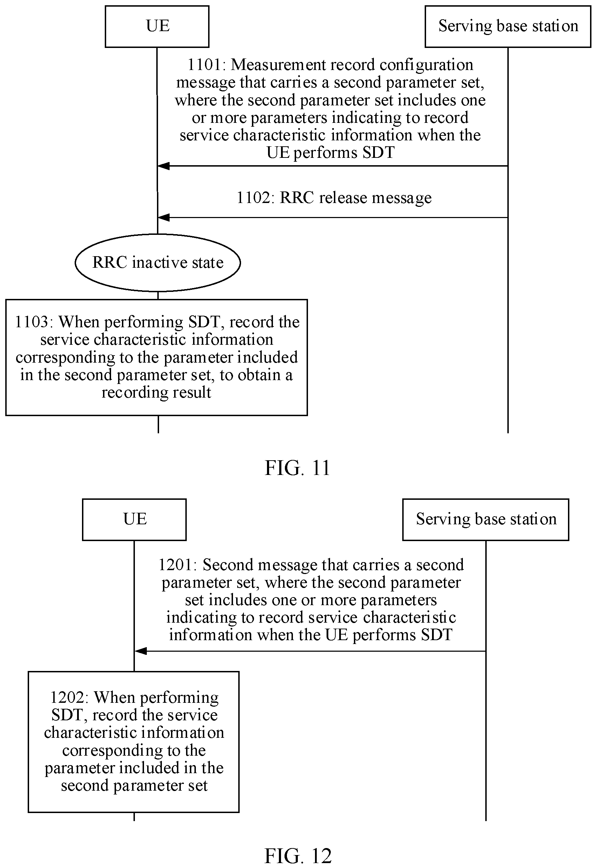

In addition, in a possible embodiment, an example in which a network device that provides a service for a terminal device is a serving base station, and the terminal device is UE is used. A flowchart of another SDT event recording method provided in an embodiment of this application may be shown in FIG. 11. With reference to FIG. 11, the SDT event recording method may include the following steps.

Step 1101: A serving base station sends a logged measurement configuration message to UE, where the logged measurement configuration message carries a second parameter set, and the second parameter set includes one or more parameters indicating to record service characteristic information when the UE performs SDT (in an SDT period).

In this embodiment of this application, the one or more parameters that are included in the second parameter set and that indicate to record the service characteristic information when the UE performs SDT are described below.

Optionally, the parameter in the second parameter set may indicate to record at least one of the following service characteristic information:
1. Data amount (or a size of a cache) cached by the UE in an SDT process: Optionally, the cache, of the UE, that the parameter indicates to record may be cached data of the UE at a packet data convergence protocol (packet data convergence protocol, PDCP) layer or a radio link control (radio link control, RLC) layer, or may be data generated at a higher layer, for example, an RRC layer, of the UE in the SDT period.
2. Frequency at which the UE sends data to the serving base station in the SDT process: For example, the data frequency may be a time interval between adjacent data packets sent by the UE to the serving base station in the SDT process.
3. Event in which data sent by the UE to the serving base station in the SDT process exceeds a preset threshold: For example, if the SDT fails because the data sent by the UE to the serving base station in the SDT process exceeds the preset threshold, the UE may record the failure event.
4. Frequency at which the UE transmits data to the serving base station in segments in the SDT process: Specifically, in the SDT process, the UE may record, based on whether data sent to the serving base station is transmitted in segments, the frequency at which data is transmitted to the serving base station in segments.
5. Time and/or frequency at which the UE receives a downlink paging (paging) message from the serving base station in the SDT process: The downlink paging message is used to trigger the UE to receive downlink data in the SDT period. For example, the downlink paging message may be an MT-SDT paging message.
6. Movement trajectory information of the UE in the SDT process: Optionally, the UE may record location information of the UE in the SDT process, to record the movement trajectory information of the UE in the SDT period.
7. Cell signal strength measured when the UE triggers cell reselection (cell reselection) in the SDT process
8. Event in which the UE switches (switch) from an original network (which may be referred to as a first network) to another network (which may be referred to as a second network) in a multi-subscriber identity module (Multi-SIM) scenario in the SDT process: For example, the first network may be a network of an operator A, and the second network may be a network of an operator B. If a parameter in the second parameter set indicates to record the event, and if the UE switches from the network of the operator A to the network of the operator B in the SDT process, the UE may record the event.
9. Reason for entering an idle state by the UE: For example, the reason for entering the idle state by the UE may be that the UE triggers a radio link failure (radio link failure, RLF) event, or may be that the UE triggers cell reselection.
10. Reason for terminating an SDT session by the UE, or reason for ending SDT by the UE: For example, the reason for terminating the SDT session by the UE may be that the serving base station sends a first indication message to the UE, to indicate the terminal device to enter an idle state or an inactive state, so as to trigger the UE to terminate the SDT session. For example, the first indication message may be an RRC release message. Alternatively, the reason may be that an SDT timer (SDT Timer) of the UE expires, and the UE terminates the SDT session and enters an idle state.
11. Event that triggers, in the SDT process of the UE, the UE to request resumption of an RRC connected state: Optionally, the UE may send an RRC resume request message to the serving base station to request resumption of the RRC connected state. The RRC resume request message is a second RRC resume request message (Second RRCResumeRequest) sent by the UE after an RRC resume request message (Msg3) sent together with data after the UE triggers SDT. Alternatively, the UE may send a newly defined RRC message to the serving base station to request resumption of the RRC connected state.

Optionally, the event that triggers the UE to request resumption of the RRC connected state may include at least one of the following:
A non-SDT (non-SDT) service arrives at the UE, the UE triggers cell selection (cell selection) or cell reselection, and in the Multi-SIM scenario, the UE returns to the first network from another network. The non-SDT service is a service that cannot be transmitted by using an SDT procedure.

12. Related information existing when the UE returns to the first network from another network in the Multi-SIM scenario: For example, the related information may be information such as a time and a reason for returning to the first network from the another network by the UE. The information may also be referred to as information such as a time and a reason of a switching type (Switching Type).

Step 1102: The serving base station sends an RRC release message to the UE, so that the UE in the connected state enters the inactive state.

Step 1103: The UE in the inactive state determines to perform SDT, and when performing SDT, records, based on the logged measurement configuration message, the service characteristic information corresponding to the parameter included in the second parameter set, to obtain a recording result.

In a possible implementation, the UE may record, in a form of a log, the service characteristic information when the UE performs SDT, and store the service characteristic information.

Optionally, if the logged measurement configuration message carries MDT measurement configuration information, the UE may further perform related MDT measurement after entering the inactive state, and obtain a measurement result.

Optionally, after obtaining the recording result, the UE may send the recording result to the serving base station or a network management platform. The serving base station or the network management platform may determine, based on the recording result, a service status when the UE performs SDT, to implement fast location when a problem occurs in an SDT procedure of the UE. The serving base station or the network management platform may further optimize an SDT configuration parameter or a configuration resource of the UE based on the recording result reported by the UE. For example, based on the recording result from the UE, the serving base station or the network management platform may adjust a CG Grant Size, or deliver auxiliary indication information such as information indicating whether the UE migrates an RRC state in the SDT period.

Based on the SDT event recording method provided in this embodiment of this application, when performing SDT, the UE may record the service characteristic information of the UE based on an indication of the serving base station, to help locate a problem occurring in the SDT period of the UE, and optimize the SDT configuration parameter.

It should be noted that, the embodiment shown in FIG. 11 is an example description of the SDT event recording method provided in this application. In another possible embodiment, as shown in FIG. 12, the SDT event recording method may include the following steps.

Step 1201: A serving base station sends a second message to UE, where the second message carries a second parameter set, and the second parameter set includes one or more parameters indicating to record service characteristic information when the UE performs SDT. For example, the second message may be a logged measurement configuration message.

Step 1202: When performing SDT, the UE records the service characteristic information corresponding to the parameter included in the second parameter set.

An implementation of steps 1201-1202 is similar to that of steps 1101-1103, and reference may be made to the descriptions of steps 1101-1103.

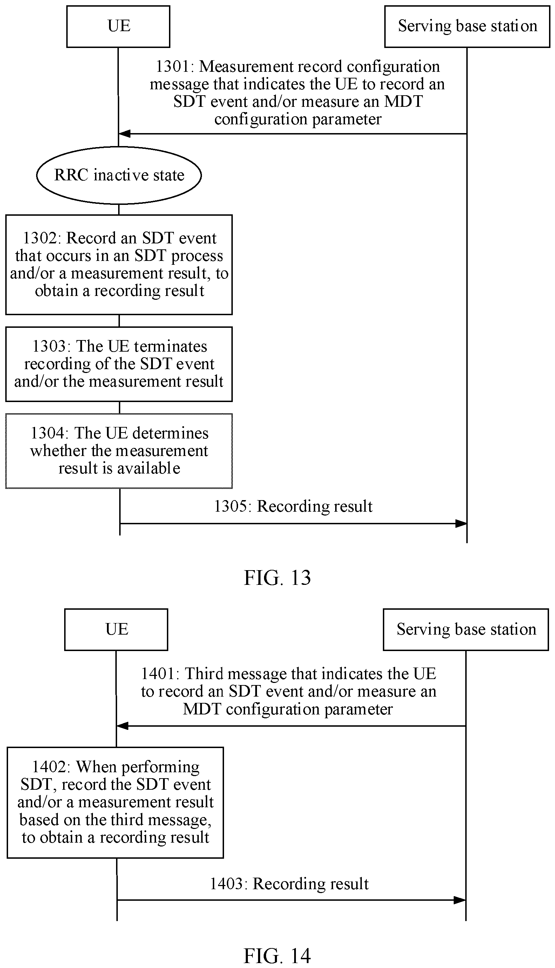

In addition, in a possible embodiment, an example in which a network device that provides a service for a terminal device is a serving base station, and the terminal device is UE is used. A flowchart of another SDT event recording method provided in an embodiment of this application may be shown in FIG. 13. With reference to FIG. 13, the SDT event recording method may include the following steps.

Step 1301: UE receives a logged measurement configuration message from a serving base station, where the logged measurement configuration message is used to indicate the UE to record an SDT event and/or measure an MDT configuration parameter.

Optionally, the logged measurement configuration message may be carried in an RRC release message and sent to the UE.

For the SDT event that the logged measurement configuration message indicates the UE to record, refer to the transmission status information in step 901 and/or the service characteristic information in step 1101.

Step 1302: The UE triggers an SDT procedure, an SDT Timer starts to run, and the UE starts to record, based on an indication of the logged measurement configuration message, a related SDT event that occurs in an SDT process, and/or performs measurement based on a related MDT configuration parameter, to obtain a measurement result based on the MDT configuration parameter (which is briefly referred to as a measurement result below), and records the measurement result, to obtain a recording result, where the recording result includes the SDT event and/or the measurement result that are/is recorded by the UE. One recorded SDT event or one measurement result may be one record in the recording result.

In this embodiment of this application, a process in which the UE records the SDT event and/or the measurement result in the SDT process may be referred to as SDT-MDT measurement (Logged SDT-MDT). Correspondingly, the recording result obtained by the UE may be referred to as a logged SDT-MDT recording result.

Step 1303: The UE terminates recording of the SDT event and/or the measurement result.

In this embodiment of this application, the UE may terminate recording of the SDT event and/or the measurement result after an SDT session of the UE is terminated.

For example, termination of the SDT session of the UE may be triggered in the following manner: The UE receives an RRC release message from the serving base station. Alternatively, the UE migrates from an inactive state to an RRC connected state. For example, the UE sends an RRC resume request to the serving base station, to request resumption of the RRC connected state. Alternatively, the SDT Timer expires.

Step 1304: The UE determines whether the logged SDT-MDT recording result is available (available).

In a possible implementation, when a quantity of records included in the obtained logged SDT-MDT recording result reaches a specific threshold, the UE may consider that the obtained recording result is available. Optionally, the threshold that the quantity of records needs to reach may be configured by the serving base station for the UE, or may be predefined by the UE.

In another possible implementation, when a value of at least one record included in the obtained logged SDT-MDT recording result reaches a corresponding specific threshold, the UE may consider that the obtained recording result is available. For example, the logged SDT-MDT recording result obtained by the UE includes a data amount that is cached in the SDT process and that is recorded by the UE. When the recorded data amount cached in the SDT process is greater than a corresponding preset threshold, for example, the corresponding preset threshold may be 100 bits, the UE considers that the obtained recording result is available.

Step 1305: When determining that the recording result is available, the UE sends the recording result to the serving base station.

A specific implementation in which the UE sends the recording result to the serving base station is described below.

In a possible implementation, the UE may send a fourth message indicating that the recording result is available or that there is an available recording indication in the terminal device to the serving base station. For example, the fourth message may be carried in an RRC resume request message or an RRC setup request (RRC Setup Request) message. The RRC Setup Request message is used to request to establish an RRC connection. For example, the indication information indicating that the recording result is available may be logged-SDT-MDT available (logged-SDT-MDT Available) information. The serving base station may determine, based on the indication information sent by the UE, that the terminal device has obtained an available recording result, to determine whether the UE needs to report the recording result, so as to determine whether to indicate the UE to report the recording result. Optionally, if the serving base station determines that the UE needs to report the recording result, the serving base station may send, to the UE, a second indication information indicating the UE to report the recording result. After receiving the second indication information, the UE may send the recording result to the serving base station based on an indication of the second indication information.

In another possible implementation, the UE may send a recording result (a historical recording result) obtained after last SDT ends to the serving base station in each SDT period. Optionally, the historical result may be carried in an RRC message or a MAC layer message. For example, when migrating from the inactive state to the connected state, the UE may add the recording result of the last SDT to an RRC resume complete message to be sent to the serving base station. Optionally, a message that the historical recording result needs to be carried in may be indicated by the serving base station to the UE by using indication information or configuration information sent to the UE.

In still another possible implementation, the serving base station actively sends, to the UE, a third indication message indicating the UE to report the recording result. After receiving the third indication message, the UE sends the recording result to the serving base station based on the third indication message. For example, the serving base station may add information such as identification information, a field, or a parameter used to request reporting of the recording result to a UE information request message to be sent to the UE. After receiving the UE information request message sent by the serving base station, the UE adds, based on the identification information used to request reporting of the recording result, the recording result obtained in the SDT period to a UE information response message to be sent to the serving base station.

It should be noted that, the embodiment shown in FIG. 13 is an example description of the SDT event recording method provided in this application. In another possible embodiment, as shown in FIG. 14, the SDT event recording method may include the following steps.

Step 1401: A serving base station sends a third message to UE, where the third message is used to indicate the UE to record an SDT event and/or measure an MDT configuration parameter. For example, the third message may be a logged measurement configuration message.

Step 1402: When performing SDT, the UE records the SDT event and a measurement result based on the third message, to obtain a recording result.

Step 1403: The UE sends the recording result to the serving base station.

Optionally, before step 1403, step 1402.1 in which the UE determines, based on a quantity of recorded SDT events and/or a quantity of measured MDT configuration parameters, whether the recording result is available may be further included. When determining that the recording result is available, the UE performs step 1403. Otherwise, step 1403 is not performed.

An implementation of steps 1401-1403 is similar to that of steps 1301-1305, and reference may be made to the descriptions of steps 1301-1305.

It should be noted that, the actions of the network device in the foregoing method embodiment may be performed by instructing the serving base station by the processor 701 in the communication apparatus 70 shown in FIG. 7 by invoking the application program code stored in the memory 704, and the actions of the terminal device may be performed by instructing the terminal device by the processor 701 in the communication apparatus 70 shown in FIG. 7 by invoking the application program code stored in the memory 704.

It may be understood that, the methods and/or the steps implemented by the network device or the terminal device in the foregoing method embodiments may alternatively be implemented by a part (for example, a chip or a circuit) that can be used in the network device or the terminal device.

Optionally, an embodiment of this application further provides a communication apparatus. The communication apparatus is configured to implement the foregoing methods. The communication apparatus may be the network device or the terminal device in the foregoing method embodiments, an apparatus including the network device or the terminal device, or a part that can be used in the network device or the terminal device. It may be understood that to implement the foregoing functions, the communication apparatus includes corresponding hardware structures and/or software modules for performing the functions. It should be readily appreciated by a person skilled in the art that the example units, algorithms, and steps described with reference to the embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. In an actual implementation, another division manner may be used.

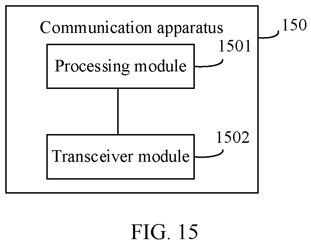

FIG. 15 is a schematic diagram of a structure of a communication apparatus 150. The communication apparatus 150 includes a processing module 1501 and a transceiver module 1502. The transceiver module 1502 may also be referred to as a transceiver unit, to implement a transceiver function, for example, may be a transceiver circuit, a transceiver machine, a transceiver, or a communication interface.

For example, the communication apparatus 150 is the terminal device in the foregoing method embodiments.

In a possible implementation, the transceiver module 1502 may be configured to receive a first message from a network device. The first message includes a first parameter set, and the first parameter set includes one or more parameters for recording transmission characteristic information in an SDT period. The processing module 1501 may be configured to record the transmission characteristic information corresponding to the one or more parameters in the first parameter set based on the first message.

Optionally, the first parameter set includes at least one first parameter, and the first parameter is used to indicate to record a measurement value of a beam signal of a serving cell.

Optionally, SDT includes configured grant-small data transmission CG-SDT or random access channel-small data transmission RACH-SDT; and the first parameter set includes at least one second parameter, and the second parameter is used to indicate to record an event of the CG-SDT and/or an event of the RACH-SDT.

Optionally, the event of the CG-SDT includes one or more of the following: After sending data to the network device on a CG resource, the terminal device receives no feedback information; when the terminal device sends data to the network device on a CG resource, a signal value of a target cell is less than a preset threshold, or a signal value of a target beam is less than a preset threshold; a quantity of times the terminal device sends data to the network device on a CG resource reaches a maximum quantity of retransmissions; after sending a layer 3 L3 message and/or data to the network device on a CG resource, the terminal device starts a CG-SDT timer, and before the CG-SDT timer expires, receives no acknowledgment message, layer 2 L2 message, L3 message, or scheduled data from the network device; or a timing advance TA timer of the terminal device expires, and a CG resource becomes unavailable.

Optionally, the event of the RACH-SDT includes one or more of the following: a reason for failing to send Msg3 and data to the network device by the terminal device; or a quantity of times the terminal device fails to send Msg3 and data to the network device and/or a total quantity of times the terminal device sends Msg3 and the data to the network device. The total quantity of times includes the quantity of times of failing to send Msg3 and the data and a quantity of times of successfully sending Msg3 and the data.

In another possible implementation, the transceiver module 1502 may be configured to receive a second message from a network device. The second message includes a second parameter set, and the second parameter set includes one or more parameters indicating to record service characteristic information in an SDT period. The processing module 1501 may be configured to record service information corresponding to each parameter in the second parameter set based on the first message

Optionally, the service characteristic information includes at least one of the following: a cache of the terminal device, a frequency at which the terminal device sends data to the network device, data sent by the terminal device to the network device exceeding a preset threshold, a frequency at which the terminal device transmits data to the network device in segments, a time and/or a frequency at which the terminal device receives an MT-SDT message from the network device, a movement trajectory of the terminal device, signal strength of a cell reselected by the terminal device, an event in which the terminal device switches from a first network to a second network in a multi-subscriber identity module Multi-SIM scenario, a reason for entering an idle state by the terminal device, a reason for terminating an SDT session by the terminal device, and an event that triggers the terminal device to request resumption of a radio resource control RRC connected state from the network device.

Optionally, the reason for entering the idle state by the terminal device includes: The terminal device triggers radio link failure or the terminal device triggers cell reselection.

Optionally, the reason for terminating the SDT session by the terminal device includes: The terminal device receives a first indication message from the network device, where the first indication message is used to indicate the terminal device to enter the idle state or an inactive state; or an SDT timer of the terminal device expires.

Optionally, the event that triggers the terminal device to request resumption of the radio resource control RRC connected state from the network device includes at least one of the following: A non-SDT service arrives, the terminal device triggers cell selection or cell reselection, and in the Multi-SIM scenario, the terminal device switches from the second network to the first network.

Optionally, the second message is a measurement record configuration message.

In still another possible implementation, the transceiver module 1502 may be configured to receive a third message from a network device. The third message is used to indicate the terminal device to record an SDT event and/or measure a minimization of drive tests MDT configuration parameter. The processing module 1501 records, based on the third message, the SDT event and/or a measurement result based on the MDT configuration parameter, to obtain a recording result. The transceiver module 1502 may be further configured to send the recording result to the network device.

Optionally, the third message is a measurement record configuration message.

Optionally, the transceiver module 1502 is specifically configured to: send a fourth message to the network device, where the fourth message is used to indicate that the terminal device has obtained an available recording result or there is an available recording indication in the terminal device; receive a second indication message from the network device, where the second indication message is used to indicate the terminal device to send the recording result to the network device; and send the recording result to the network device based on the second indication message.

Optionally, the fourth message is carried in a radio resource control RRC resume request message or an RRC setup request message.

Optionally, the transceiver module 1502 is specifically configured to send a historical recording result obtained after last SDT ends to the network device in each SDT period.

Optionally, the historical recording result is carried in an RRC message or a MAC layer message.

Optionally, the transceiver module 1502 is specifically configured to: receive a third indication message from the network device, where the third indication message is used to indicate the terminal device to send the recording result to the network device; and send the recording result to the network device based on the third indication message.

Optionally, the third indication message is a terminal information request message; and the recording result is carried in a terminal information response message.

Optionally, before the processing module 1501 records, based on the third message, the SDT event and/or the measurement result based on the MDT configuration parameter, an SDT timer of the terminal device starts to run.

Optionally, the processing module 1501 is specifically configured to: record, based on the third message, the SDT event and/or the measurement result based on the MDT configuration parameter; when the SDT timer expires, stop recording the SDT event and/or the measurement result based on the MDT configuration parameter; and obtain the recording result based on the SDT event and/or the measurement result based on the MDT configuration parameter that are/is recorded in a running period of the SDT timer.

Optionally, the processing module 1501 is specifically configured to: record, based on the third message, the SDT event and/or the measurement result based on the MDT configuration parameter; when an SDT session is terminated, stop recording the SDT event and/or the measurement result based on the MDT configuration parameter; and obtain the recording result based on the recorded SDT event and the measured MDT configuration parameter.

Optionally, the recording result sent by the transceiver module 1502 to the network device is an available measurement result; and the available recording result is determined by the processing module 1501 based on a quantity of recorded SDT events and/or a quantity of recorded measurement results based on the MDT configuration parameter.

For example, the communication apparatus 150 is the network device in the foregoing method embodiments.

In a possible implementation, the transceiver module 1502 may be configured to send a first message to a terminal device. The first message includes a first parameter set, and the first parameter set includes one or more parameters for recording transmission characteristic information in an SDT period.

In another possible implementation, the transceiver module 1502 may be configured to send a second message to a terminal device. The second message includes a second parameter set, and the second parameter set includes one or more parameters indicating to record service characteristic information in an SDT period.

In still another possible implementation, the transceiver module 1502 may be configured to send a third message to a terminal device. The third message is used to indicate the terminal device to record an SDT event and/or measure a minimization of drive tests MDT configuration parameter. The transceiver module 1502 may be further configured to receive a recording result from the terminal device.

It should be noted that, all related content of the steps in the foregoing method embodiments may be cited in function descriptions of the corresponding functional modules. Details are not described herein again. The communication apparatus 150 provided in this embodiment may perform the SDT event recording method. Therefore, for technical effects that can be achieved by the communication apparatus 150, refer to the foregoing method embodiments. Details are not described herein again.

Optionally, the network device or the terminal device in this embodiment of this application may also be referred to as a communication apparatus. The network device or the terminal device may be a general-purpose device or a dedicated device. This is not specifically limited in this embodiment of this application.

In this embodiment, the communication apparatus 150 is presented in a form of obtaining each functional module through division in an integrated manner. The "module" herein may refer to a specific ASIC, a circuit, a processor and a memory that execute one or more software or firmware programs, an integrated logic circuit, and/or another device that can provide the foregoing functions. In a simple embodiment, a person skilled in the art may figure out that the communication apparatus 150 may be in a form of the communication apparatus 70 shown in FIG. 7.

For example, the processor 701 in the communication apparatus 70 shown in FIG. 7 may invoke the computer-executable instructions stored in the memory 704, to enable the communication apparatus 70 to perform the SDT event recording method in the foregoing method embodiments.

Specifically, functions/implementation processes of the processing module 1501 and the transceiver module 1502 in FIG. 15 may be implemented by invoking, by the processor 701 in the communication apparatus 70 shown in FIG. 7, the computer-executable instructions stored in the memory 704. Alternatively, a function/implementation process of the processing module 1501 in FIG. 15 may be implemented by invoking, by the processor 701 in the communication apparatus 70 shown in FIG. 7, the computer-executable instructions stored in the memory 704, and a function/implementation process of the transceiver module 1502 in FIG. 15 may be implemented by using the communication interface 703 in the communication apparatus 70 shown in FIG. 7.

The communication apparatus 150 provided in this embodiment may perform the SDT event recording method. Therefore, for technical effects that can be achieved by the communication apparatus 150, refer to the foregoing method embodiments. Details are not described herein again.

It should be understood that sequence numbers of the foregoing processes do not mean execution sequences in various embodiments of this application. The execution sequences of the processes should be determined based on functions and internal logic of the processes, and should not constitute any limitation on the implementation processes of the embodiments of this application.

A person of ordinary skill in the art may be aware that the example units, algorithms, and steps described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, for detailed working processes of the system, apparatus, and unit described above, refer to the corresponding processes in the foregoing method embodiments. Details are not described herein again.

In the several embodiments provided in this application, it should be understood that the disclosed system, device, and method may be implemented in other manners. For example, the device embodiment described above is merely an example. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections can be implemented by using some interfaces. The indirect couplings or communication connections between the devices or units may be implemented in electronic, mechanical, or other forms.

The units described as separate parts may or may not be physically separate, and parts displayed as units may or may not be physical units, that is, may be located at one location, or may be distributed on a plurality of network units. Some or all of the units may be selected depending on actual requirements to achieve the objectives of the solutions in the embodiments.

In addition, functional units in the embodiments of this application may be integrated into one processing unit, each unit may exist alone physically, or two or more units may be integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, for example, a server or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Terms such as "component", "module", and "system" used in this application are intended to refer to computer-related entities. The computer-related entities may be hardware, firmware, combinations of hardware and software, software, or running software. For example, the component may be but is not limited to a process that runs on a processor, a processor, an object, an executable file, an executed thread, a program, and/or a computer. In an example, both an application that runs on a computing device and the computing device may be components. One or more components may exist in an executed a process and/or thread, and the component may be located in one computer and/or distributed between two or more computers. In addition, these components can be executed from various computer-readable media that store various data structures. These components may communicate by using a local and/or remote process based on, for example, a signal having one or more data packets (for example, data from a component that interacts with another component in a local system or a distributed system and/or interacts with another system by using a signal through a network such as the Internet).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like described with reference to the accompanying drawings. In addition, a combination of these solutions may be used.

In addition, in the embodiments of this application, the word "example" is used to represent giving an example, an illustration, or a description. Any embodiment or design solution described as an "example" in this application should not be explained as being more preferred or having more advantages than another embodiment or design solution. Exactly, use of the word "example" is intended to present a concept in a specific manner.

In the embodiments of this application, "information (information)", "signal (signal)", "message (message)", and "channel (channel)" sometimes may be interchangeably used. It should be noted that, when a difference between "information", "signal", "message", and "channel" is not emphasized, meanings expressed by "information", "signal", "message", and "channel" are consistent. "Of (of)", "corresponding or relevant (corresponding or relevant)", and "corresponding (corresponding)" sometimes may be interchangeably used. It should be noted that, when a difference between "of", "corresponding or relevant", and "corresponding" is not emphasized, meanings expressed by "of", "corresponding or relevant", and "corresponding" are consistent. "System" and "network" sometimes may be interchangeably used. When a difference between "system" and "network" is not emphasized, meanings expressed by "system" and "network" are consistent. For example, "communication network" refers to "communication system".

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of new service scenarios, the technical solutions provided in the embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A small data transmission SDT event recording method, wherein the method comprises:
receiving, by a terminal device, a first message from a network device, wherein the first message comprises a first parameter set, and the first parameter set comprises one or more parameters for recording transmission characteristic information in an SDT period; and
recording, by the terminal device, the transmission characteristic information corresponding to the one or more parameters in the first parameter set based on the first message.

2. The method according to claim 1, wherein the first parameter set comprises at least one first parameter, and the first parameter is used to indicate to record a measurement value of a beam signal of a serving cell.

3. The method according to claim 1 or 2, wherein SDT comprises configured grant-small data transmission CG-SDT or random access channel-small data transmission RACH-SDT; and the first parameter set comprises at least one second parameter, and the second parameter is used to indicate to record an event of the CG-SDT and/or an event of the RACH-SDT.

4. The method according to claim 3, wherein the event of the CG-SDT comprises one or more of the following:
after sending data to the network device on a CG resource, the terminal device receives no feedback information;
when the terminal device sends data to the network device on a CG resource, a signal value of a target cell is less than a preset threshold, or a signal value of a target beam is less than a preset threshold;
a quantity of times the terminal device sends data to the network device on a CG resource reaches a maximum quantity of retransmissions;
after sending a layer 3 L3 message and/or data to the network device on a CG resource, the terminal device starts a CG-SDT timer, and before the CG-SDT timer expires, receives no acknowledgment message, layer 2 L2 message, L3 message, or scheduled data from the network device; or
a timing advance TA timer of the terminal device expires, and a CG resource becomes unavailable.

5. The method according to claim 3 or 4, wherein the event of the RACH-SDT comprises one or more of the following:
a reason for failing to send Msg3 and data to the network device by the terminal device; or
a quantity of times the terminal device fails to send Msg3 and data to the network device and/or a total quantity of times the terminal device sends Msg3 and the data to the network device, wherein the total quantity of times comprises the quantity of times of failing to send Msg3 and the data and a quantity of times of successfully sending Msg3 and the data.

6. The method according to any one of claims 1-5, wherein the first message is a measurement record configuration message.

7. A small data transmission SDT event recording method, wherein the method comprises:
receiving, by a terminal device, a second message from a network device, wherein the second message comprises a second parameter set, and the second parameter set comprises one or more parameters indicating to record service characteristic information in an SDT period; and
recording, by the terminal device, service information corresponding to each parameter in the second parameter set based on the first message.

8. The method according to claim 7, wherein the service characteristic information comprises at least one of the following:
a cache of the terminal device, a frequency at which the terminal device sends data to the network device, data sent by the terminal device to the network device exceeding a preset threshold, a frequency at which the terminal device transmits data to the network device in segments, a time and/or a frequency at which the terminal device receives an MT-SDT message from the network device, a movement trajectory of the terminal device, signal strength of a cell reselected by the terminal device, an event in which the terminal device switches from a first network to a second network in a multi-subscriber identity module Multi-SIM scenario, a reason for entering an idle state by the terminal device, a reason for terminating an SDT session by the terminal device, and an event that triggers the terminal device to request resumption of a radio resource control RRC connected state from the network device.

9. The method according to claim 8, wherein the reason for entering the idle state by the terminal device comprises:
the terminal device triggers radio link failure or the terminal device triggers cell reselection.

10. The method according to claim 8 or 9, wherein the reason for terminating the SDT session by the terminal device comprises:
the terminal device receives a first indication message from the network device, wherein the first indication message is used to indicate the terminal device to enter the idle state or an inactive state; or
an SDT timer of the terminal device expires.

11. The method according to any one of claims 8-10, wherein the event that triggers the terminal device to request resumption of the radio resource control RRC connected state from the network device comprises at least one of the following:
a non-SDT service arrives, the terminal device triggers cell selection or cell reselection, and in the Multi-SIM scenario, the terminal device switches from the second network to the first network.

12. The method according to any one of claims 7-11, wherein the second message is a measurement record configuration message.

13. A small data transmission SDT event recording method, wherein the method comprises:
receiving, by a terminal device, a third message from a network device, wherein the third message is used to indicate the terminal device to record an SDT event and/or measure a minimization of drive tests MDT configuration parameter;
recording, by the terminal device based on the third message, the SDT event and/or a measurement result based on the MDT configuration parameter, to obtain a recording result; and
sending, by the terminal device, the recording result to the network device.

14. The method according to claim 13, wherein the third message is a measurement record configuration message.

15. The method according to claim 13 or 14, wherein the sending, by the terminal device, the recording result to the network device comprises:
sending, by the terminal device, a fourth message to the network device, wherein the fourth message is used to indicate that the terminal device has obtained an available recording result or there is an available recording indication in the terminal device;
receiving, by the terminal device, a second indication message from the network device, wherein the second indication message is used to indicate the terminal device to send the recording result to the network device; and
sending, by the terminal device, the recording result to the network device based on the second indication message.

16. The method according to claim 15, wherein the fourth message is carried in a radio resource control RRC resume request message or an RRC setup request message.

17. The method according to claim 13 or 14, wherein the sending, by the terminal device, the recording result to the network device comprises:
sending, by the terminal device, a historical recording result obtained after last SDT ends to the network device in each SDT period.

18. The method according to claim 17, wherein the historical recording result is carried in an RRC message or a media access control MAC layer message.

19. The method according to claim 13 or 14, wherein the sending, by the terminal device, the recording result to the network device comprises:
receiving, by the terminal device, a third indication message from the network device, wherein the third indication message is used to indicate the terminal device to send the recording result to the network device; and
sending, by the terminal device, the recording result to the network device based on the third indication message.

20. The method according to claim 19, wherein the third indication message is a terminal information request message; and the recording result is carried in a terminal information response message.

21. The method according to any one of claims 13-20, wherein before the recording, by the terminal device based on the third message, the SDT event and/or a measurement result based on the MDT configuration parameter, the method further comprises:
an SDT timer of the terminal device starts to run.

22. The method according to claim 21, wherein the recording, by the terminal device based on the third message, the SDT event and/or a measurement result based on the MDT configuration parameter, to obtain a recording result comprises:
recording, by the terminal device based on the third message, the SDT event and/or the measurement result based on the MDT configuration parameter;
when the SDT timer expires, stopping recording, by the terminal device, the SDT event and/or the measurement result based on the MDT configuration parameter; and
obtaining, by the terminal device, the recording result based on the SDT event and/or the measurement result based on the MDT configuration parameter that are/is recorded in a running period of the SDT timer.

23. The method according to any one of claims 13-21, wherein the recording, by the terminal device based on the third message, the SDT event and/or a measurement result based on the MDT configuration parameter, to obtain a recording result comprises:
recording, by the terminal device based on the third message, the SDT event and/or the measurement result based on the MDT configuration parameter;
when an SDT session of the terminal device is terminated, stopping recording, by the terminal device, the SDT event and the measurement result based on the MDT configuration parameter; and
obtaining, by the terminal device, the recording result based on the recorded SDT event and/or the recorded measurement result based on the MDT configuration parameter.

24. The method according to any one of claims 13-23, wherein the recording result sent by the terminal device to the network device is an available recording result; and the available recording result is determined by the terminal device based on a quantity of recorded SDT events and/or a quantity of recorded measurement results based on the MDT configuration parameter.

25. A communication apparatus, wherein the communication apparatus comprises: a module or a unit configured to implement the method according to any one of claims 1-6, 7-12, or 13-24.

26. A communication apparatus, comprising: a processor and a memory, wherein the memory is configured to store computer-executable instructions, and the processor is configured to execute the instructions stored in the memory; and when the communication apparatus runs, the processor runs the instructions, to enable the communication apparatus to perform the method according to any one of claims 1-6, 7-12, or 13-24.

27. A computer-readable storage medium, wherein the computer-readable storage medium stores instructions, and when the instructions are run on a computer, the computer is enabled to perform the method according to any one of claims 1-6, 7-12, or 13-24.
